# EUROPEAN PATENT APPLICATION

(11) **EP 4 835 769 A1**
(43) Date of publication of application: **04.11.2026**
(21) Application number: 25174095.7
(22) Date of filing: 02.05.2025
(51) Int. Cl.: G06Q 10/087, G09F 19/18

(54) **A PROJECTOR**

(71) Applicant: AutoStore Technology AS, 5578 Nedre Vats (NO)
(72) Inventor: Ivarjord, Åsmund, 5578 Nedre Vats (NO)
(74) Representative: Kilburn & Strode LLP

(57) **Abstract**

The disclosure relates to a method of performing projection mapping onto one or more components of an automated storage and retrieval system comprising providing a first projector having a first field of view, the first field of view at least partially overlapping with a first surface of the one or more components of the automated storage and retrieval system, detecting a first position of the first surface; and controlling the first projector to project a first image aligned with the first position such that the first image is projected onto the first surface

## Description

### TECHNICAL FIELD

The disclosure relates to a projector. More particularly, it relates to projection mapping in an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Users may be required to access the grid or follow detailed instructions in relation to their activities on and/or around the grid. For example, it may be possible for a user to access the top of a storage grid to access a stalled container-handling vehicle. In such an instance, the user may be required to stay within bounds of a safe area in which to pass to access the vehicle. In another instance, the user may be required to pass around the grid to access different points and carry out different activities. Instructions may be followed that the user must have written down, or memorised to complete. In another example, a user may need to perform maintenance of container-handling vehicles or other parts of the automated storage and retrieval system, following instructions or paths to complete the maintenance.

Instructions, guides, or bounded areas may be communicated to a user in written instructions, or on a computer device such as a tablet or PC. The instructions may require the user to memorise or fully understand the tasks in advance so that they can safely carry out the tasks. For example, a user may be required to understand in advance, which cells on the top of a grid that they can safely access within the bounds. In another example, the user may have to keep referring to separate devices to understand tasks before returning to the physical space to carry out those tasks.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a projection mapping system according to the disclosure;
Fig. 6 shows a projection mapping system according to the disclosure;
Fig. 7 shows the projection mapping system of Fig. 6 in a further configuration;
Fig. 8 shows the projection mapping system of Fig. 6 in a further configuration;
Fig. 9 shows a projection mapping system according to the disclosure;
   Fig. 10 shows projections mapped to a container handling vehicle;
Fig. 11 shows projections mapped to a container handling vehicle;
Fig. 12 shows a projection mapping system according to the disclosure.

### DETAILED DESCRIPTION

In overview, the disclosure relates to a method of projection mapping onto one or more components of an automated storage and retrieval system. The method includes providing a projector covering the automated storage and retrieval system, detecting the position of a surface of the automated storage and retrieval system, and then projecting elements onto the surface. An automated storage and retrieval system provides a combination of elements that are stationary and elements that move or potentially obscure parts of the system. By detecting the surface, which may move around, become obscured, or be fully stationary, then the correct overlays can be projected into the right places on the grid, next to the grid, or on other components such as container handling vehicles which are being serviced. The automated storage and retrieval system also provides a unique environment for projection mapping due to the known or predicted positions of container handling vehicles on the grid. For example, the projection mapping may be adapted by detecting the location of container handling vehicles on the grid, because the control system for the grid keeps an up to date record of those vehicles. The projection can therefore be mapped based on the detection of positions already required by the control system.

### Automated storage and retrieval system overview

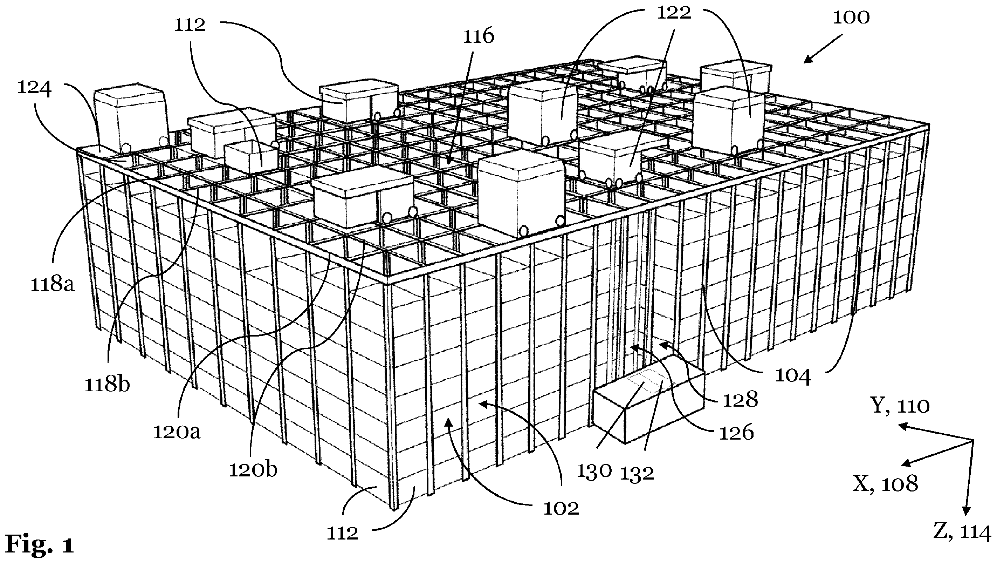

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

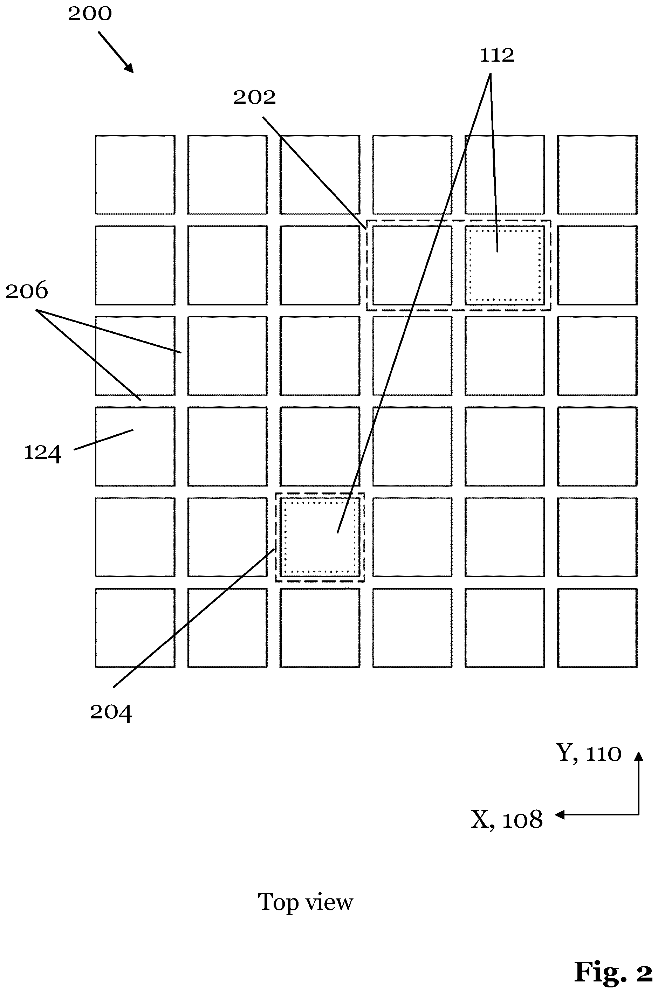

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

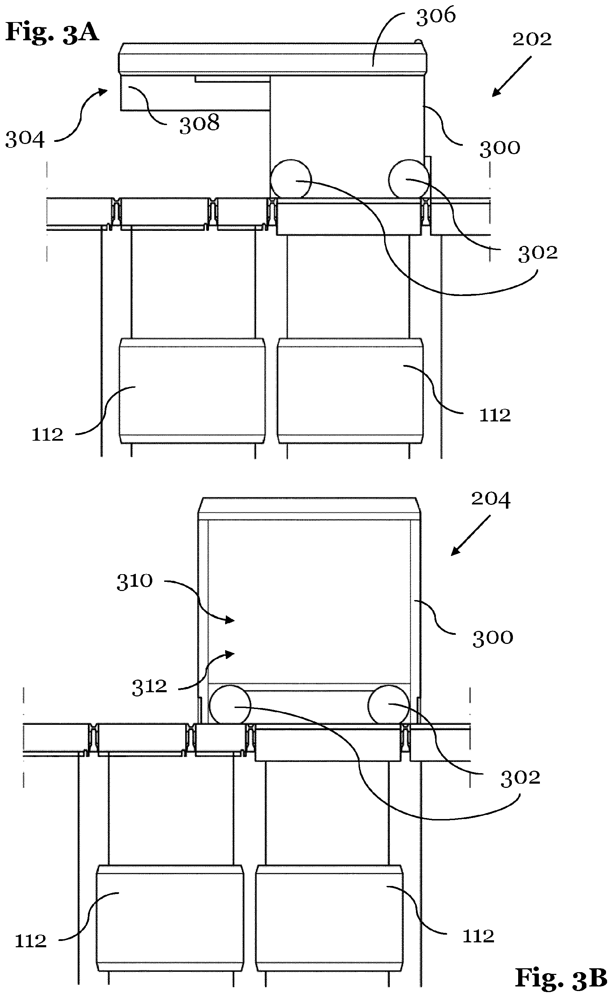

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

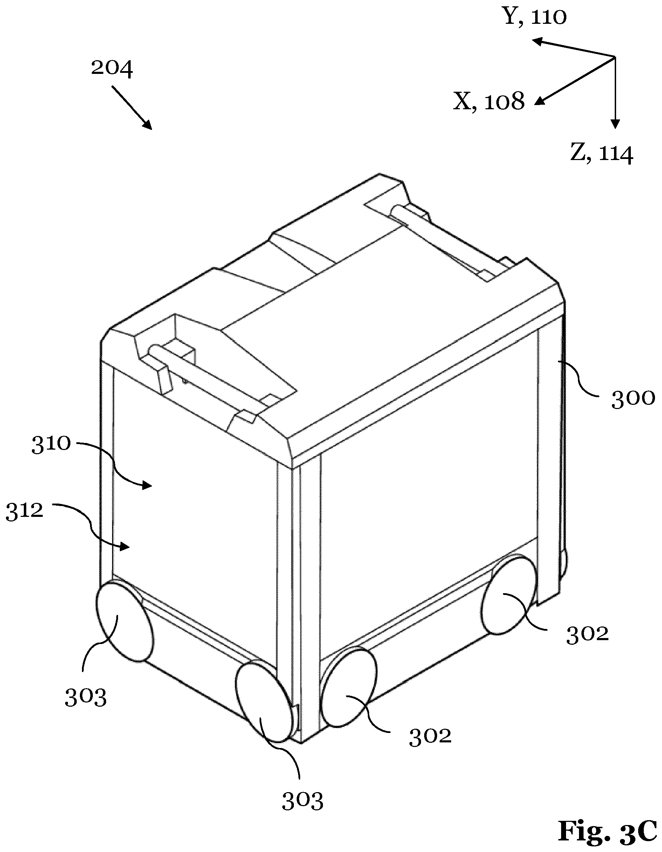

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

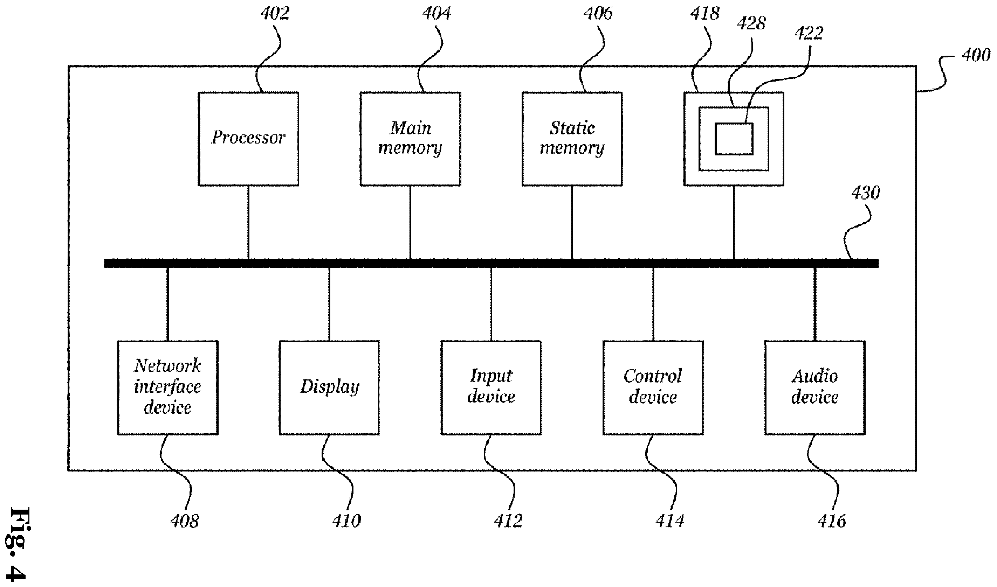

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements

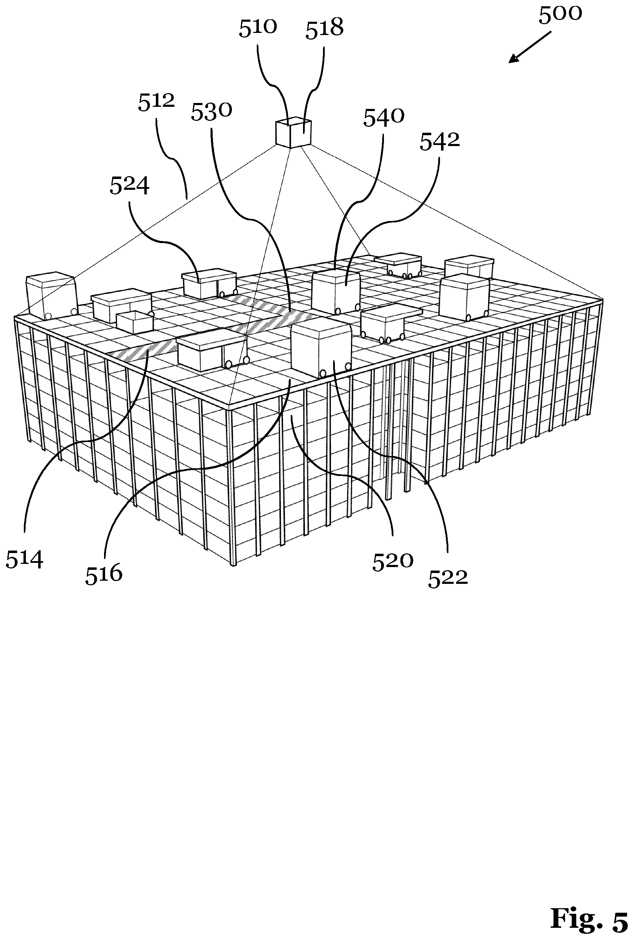

Referring to the embodiment shown in Fig. 5, a grid 500 according to an embodiment is shown. The grid 500 is substantially the same as grid 100 described herein. The grid 500 include a rail system 516 on which a plurality of robots 522 operate. Grid 500 further includes a first projector 510. The first projector 510 is shown mounted above the rail system 516, and has a first field of view 512. The first field of view 512 of the first projector 510 is shown corresponding to the extent of the rail system 516. However, the first field of view 512 may be larger than the extent of the rail system 516. Where the field of view 512 is larger than the extent of the rail system 516, the projector 510 may be capable of projecting onto surfaces outside of the rail system 516, or the projector 510 may be configured to only project onto surfaces over the extent of the rail system 516 which is smaller than the field of view 512. It will be appreciated that providing the first projector 510 in such a position above the rail system 516 allows for light to be projected onto one or more surfaces on the grid 500. For example, the projector 510 is capable of projecting light onto the rails of the rail system 516, onto surfaces of the robots 522 operating on the rail system 516, onto storage bins 520 located in or on the grid 500, or onto any other suitable structure of the grid 500. In Fig. 5, a projection pattern 514 is shown being projected onto the rail system 516 at the top of the grid 500.

The projector 510 may be a laser projector. A laser projector is a projector that projects laser beams onto a surface to produce an image. The laser projector may include a single-color projection (for example one of red, blue, or green laser light) or the laser projector may provide a combination of colours which combine to produce a full colour image. Laser projection allows for particularly bright images to be projected compared to conventional projectors. However, the projector 510 may alternatively be a conventional projector (for example an LCD-based or DLP-based projector).

The projection pattern 514 may include a safe path for a user to access the grid 500. For example, as shown in Fig. 5, the projection pattern 514 extends over a plurality of cells of the grid, projected onto the rail system 516, outlining a path between a first side of the grid 500, and the location of a first robot 524 of the plurality of robots 522. By projecting the projection pattern 514 onto the rail system 516, a user accessing the grid may be given a visual indication of a safe path to access the first robot 524 without conflict with other robots of the plurality of robots 522. The projection pattern 514 may correspond to an exclusion zone 530 into which other robots of the plurality of robots 522 are prevented from moving. For example, a system controller may prevent access to the exclusion zone 530 by other robots of the plurality of robots 522, such that the projection pattern 514 provides a visual indication to a user accessing the grid 500, where it is safe to pass.

To allow the projector 510 to accurately project patterns onto the grid 500, the relative position of the projector 510 to other parts of the grid 500 should be known. In a first example, the projector 510 is mounted in a fixed location above the grid 500, as shown in Fig. 5. Where the surface being projected onto is a fixed position surface within the grid 500, such as the rail system 516 or ports (not shown) of the grid, the position of that surface may be determined once, and then the position assumed to be consistent from then on. However, some parts or components of the grid 500 may not be in a fixed position. For example, where the surface to be projected onto includes a surface of a robot 522 on the grid 500, the surface is not in a fixed position but rather moves around with the robot 522 as it traverses the rail system 516. In order to project an image onto a surface which is not in a fixed position on the grid 500, the position of that surface must be detected.

In one example, the position of a first surface 540 of a first robot 542 operating on the grid may be known in a control system of the grid 500. The control system may know the positions of one or all of the robots 522 operating on the grid 500. The positions are known because the control system is typically used to perform other processes such as route planning, robot control, and other tasks. In any case, the control system has access to a current position of the first robot 542 on the grid. The current position may be known as the cell number, or the X-Y position of the first robot 542 on the grid 500. Determining the position of the first surface 540 may be done by combining the known position of the first projector 510 above the rail system 516 and the known position of the first robot 542 on the rail system 516. The projector 510 may then be controlled to project a first image aligned with the first surface 540. In some cases, the position of the first robot 542 may be moving, such as when the robot 542 is moving across the grid 500. Data regarding the speed and direction of movement of the robot 542 may be combined to provide a first image that moves with the first surface 540 across the grid 500. The control system may have access to real-time data based on recent feedback from sensors on the grid 500, for example the up to date position of a robot on the grid 500. Alternatively or additionally, the control system may predict the current position of a robot on the grid based on a first known position at a first time, and the predicted position at a second time. For example, the control system may be provided with data indicative of the position of a robot from a few seconds in the past, but the control system also has access to data which indicates that the robot is moving, or that the robot should be in a different position after a few seconds. The predicted position of a robot may be used to project the image onto the grid 500 using the projector 510.

Positions of robots 522 or other parts of the grid 500 may be known to the control system by feedback from one or more sensors on the grid 500. For example, each robot of the plurality of robots 522 may include one or more encoders which monitor the rotation of wheels of the robots 522 or the linear position of the robots 522( linear position may include the position of a linear actuator, or the linear position of the robot along the rail system 516). Sensors on the grid may include one or more of proximity sensors, ultrasound sensors, or other position sensors. Where proximity, ultrasound, or position sensors are used, the data from these sensors may be used to refine the expected position of a robot 522 on the grid 500. For example, a coarse position of a robot may be known by how much the wheels of the robot have spun, but the exact position relative to fixed components of the grid may be updated when a proximity sensor provides a more accurate reading of position.

In another example, the position of the first surface 540 of the first robot 542 may be determined by direct feedback from a sensor in communication with the projector 510, such as camera 518. Camera 518 may provide image data in observation of the top of the grid 500. A processing system, either part of the control system, or part of a different processing system, may be configured to analyse the image data to provide real-time positions of surfaces of the grid 500. For example, camera 518 may be used to track the location of the first robot 542 on the grid 500 and provide a real-time position of the first robot 542 and therefore the first surface 540. The real-time position of the first surface 540 may be used to control the projector 510 to project an image onto the first surface 540.

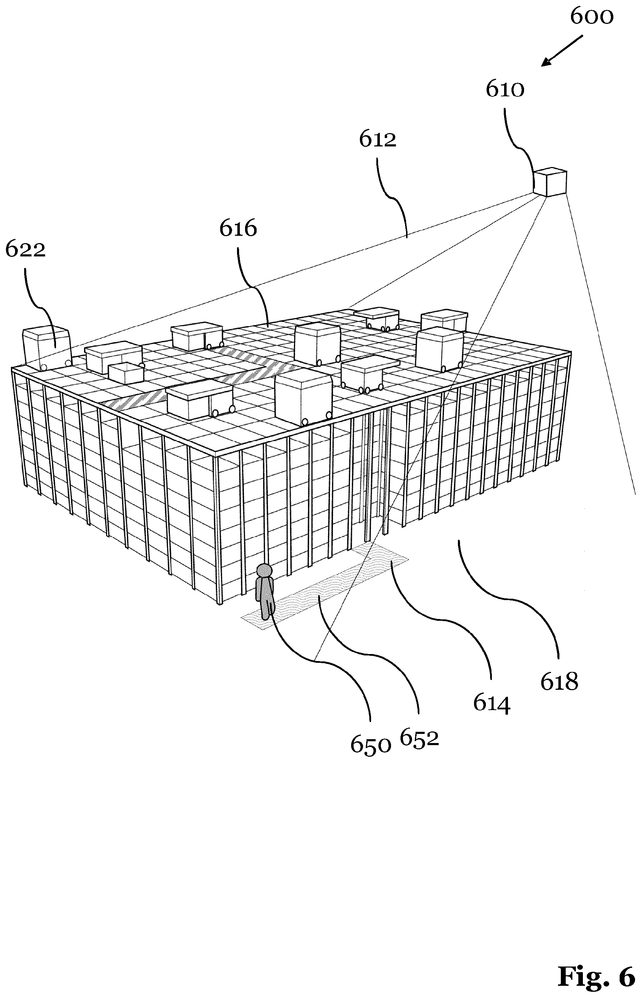

Turning to Fig. 6, a grid 600 according to an embodiment is shown. The grid 600 is substantially the same as grids 100, 500 described herein. The grid 600 includes a rail system 616 on which a plurality of robots 622 operate. Grid 600 further includes a first projector 610. The first projector 610 is shown mounted above the rail system 616, and has a first field of view 612. First field of view 612 is shown covering at least a portion of the rail system 616, and a floor surface 618 adjacent to the rail system 616. In Fig. 6, it will be appreciated that the first surface for projecting the first image 614 may include at least a portion of the floor 618 adjacent to the grid 600 or rail system 616. The first image 614 indicates a path 652 for a user 650 to pass along. The path 652 may be determined by the control system of the grid 600 in order to direct the user 650 to a particular position in or on the grid 600. In the example shown in Fig. 6, the path 652 for the user 650 is entirely located on the floor 618 adjacent to the grid, and so the first image 614 is projected entirely on the floor surface 618.

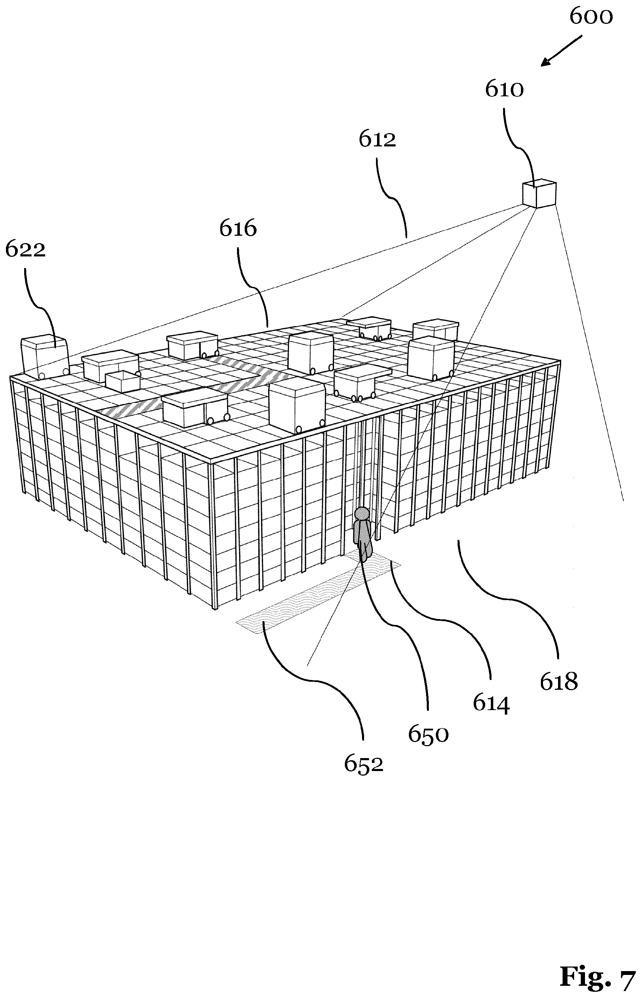

Fig. 7 shows the grid 600 of Fig. 6, wherein the user 650 has passed along the path 652. Once the user 650 has completed such an action, the control system or a processing system in communication with the projector 610 may determine that the user has completed a relevant action and that the first image 614 need no longer be shown. As shown in Fig. 7, the user has now passed all the way along the path 652 and the path 652 does not need to be shown any more. Completion of the relevant action may be determined by detecting an action of the user 650. For example, once the user 650 has passed the full length of the path 652, the user may operate a switch or other user interface device to provide feedback to the control system or processing system that the action is completed. Such feedback could, for example, be in the form of a "next instruction" button on a user interface device. Alternatively, the control system may detect the presence of the user 650 at a location because the user 650 has begun to interact with a device or user input at the location. For example, at the end of the path 652, the user may be presented with a user interface screen (not shown) where the user 650 may interact with the grid 600, such as a user interface for a port to access the grid 600. In response to detecting the interaction of the user 650 at the location, the control system or the processing system may determine that the action has been completed. In another example, other sensors for example a camera, may be used to determine that the action has been completed. For example, a camera (not shown) observing the user 650 at the end of the path 652 may be used to determine that the user 650 has completed the action of passing to the end of the path 652.

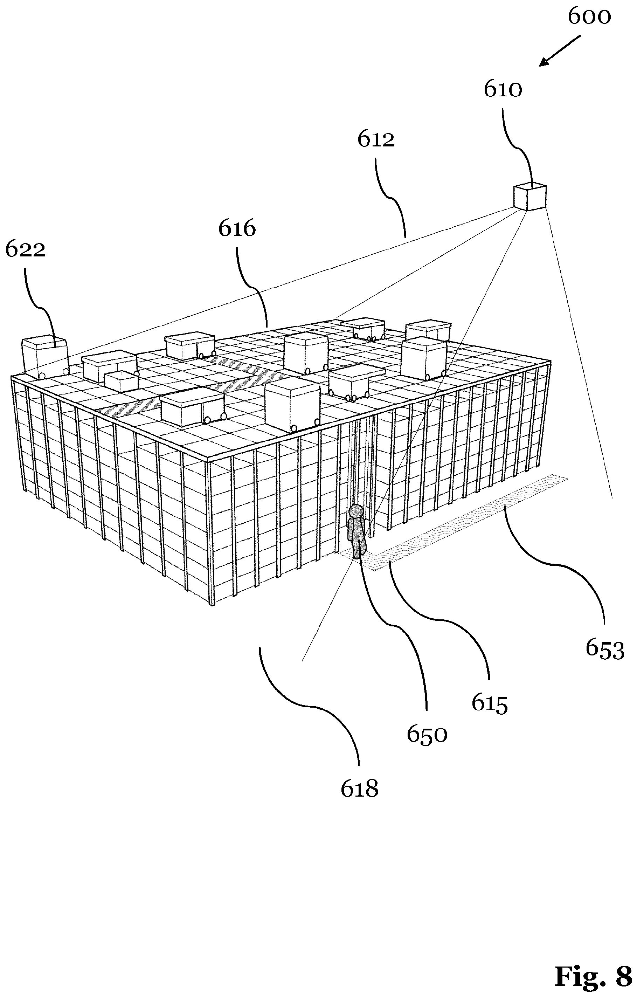

Once the control system or the processing system has determined that the action has been completed, the first image 614 may no longer be displayed, and/or a second image 615 may be displayed. Fig. 8 shows an example where a second image 615 is projected onto the same surface 618 in place of the first image 614. In the example shown in Fig. 8, the second image 615 is a second path 653 which the user 650 is intended to follow once the user 650 has passed over the first path 652. It will be appreciated that by providing automatic detection of the positions of the projection surfaces and using feedback from the grid 600, the projector 610 may provide unambiguous instructions for a user 650 to follow that do not require a user to refer to other materials or instructions. For example, a user 650 may follow the paths 652, and 653, without requiring interpretation of fixed signage or instructions. The grid 600 may update the instructions automatically to allow the user to perform functions such as operating or maintenance of the grid 600.

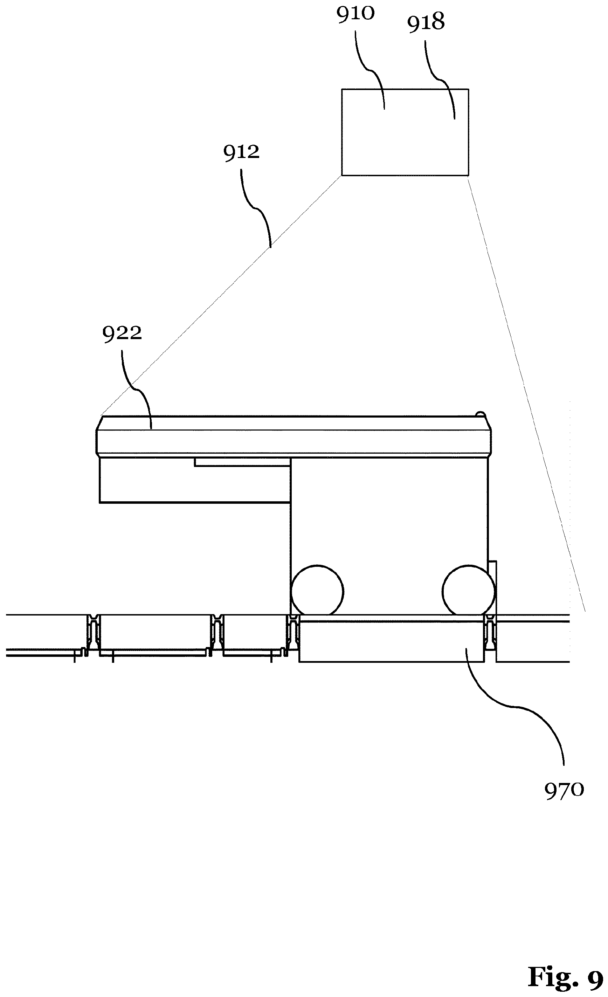

Fig. 9 shows another embodiment 900 of the present system wherein the projector 910 is mounted to have a field of view 912 covering a service area 970 for robots 922. As shown in Fig. 9 the field of view 912 may be configured to overlap with the position of a robot 922 when the robot is located in the service area 970. In this way, the projector 910 may be configured to provide instructions or guidance specifically related to the maintenance of a robot 922 in a service area 970. The presence of the robot 922 in the service area 970 may be determined from information provided by the control system, or it may be determined from information provided by a processing system in communication with the projector 910. The location of the robot 922 may be determined by one or more sensors, as found in earlier examples covering the grid, or the location of the robot 922 may be determined by analysing data from a camera 918 observing the service area 970.

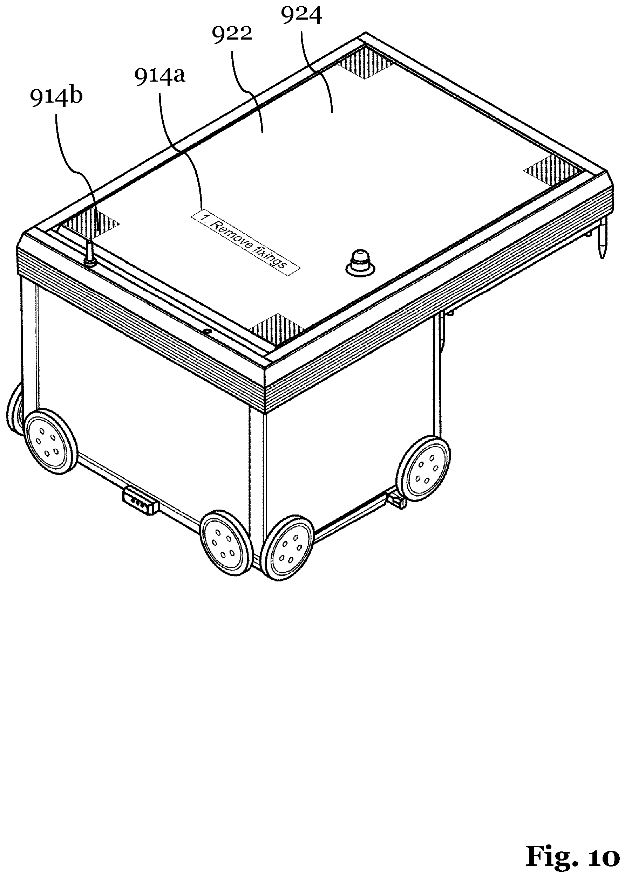

Fig. 10 shows an example of images which may be projected onto the surface of a robot 922 in the system shown in Fig. 9. The projector 910 is not shown in Fig. 10 for simplicity of the figures. In a first step of maintaining an example robot 922, there may be an instruction to remove one or more fixings from the robot 922. The first image 914 projected onto the top surface 924 of the robot 922 may include a written instruction 914a, for example "1. Remove fixings". The instruction 914a may be provided as part of the first image 914 to allow a user to observe the instruction 914a without reference to a separate device or set of instructions. Whilst the first image 914 is shown projected directly onto the top surface 924 of the robot 922, the first image 914 may be projected onto another surface, for example adjacent to the robot 922, when there is no appropriate surface of the robot 922 on which to provide the instruction. This may be the case for when the robot 922 has had all panels removed, and there are no large flat surfaces on which to provide instructions. Fig. 10 also shows a highlighted portion 914b of the top surface 924 of the robot 922. Highlights 914b may be provided to draw the user's attention to specific parts of the robot 922, in this case drawing attention to fixings which are to be removed in the first step. In this way, a user may be provided with instructions that do not require the user to look away to inspect a separate display or set of instructions.

Once the first step has been completed, the control system or a processing system in communication with the projector 910 may determine that the user has completed a relevant action and that the first image 914 need no longer be shown. The user may provide feedback to the control system or processing system by way of interacting with a user interface (not shown) to indicate completion of the relevant action and the first step. Alternatively or additionally, one or more sensors may provide feedback indicative of the first action being completed. For example, a camera 918 observing the service area 970, may be analysed to determine that the first step has been completed.

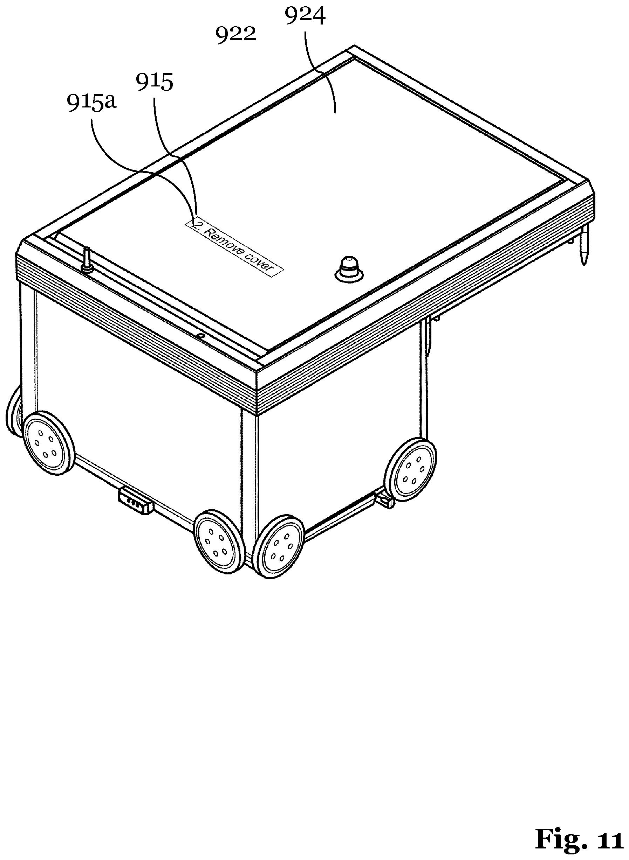

Once the control system or the processing system has determined that the action has been completed, the first image 914 may no longer be displayed, and/or a second image 915 may be displayed. Fig. 11 shows an example where a second image 915 is projected onto the same surface 924. In the example shown in Fig. 11, a second instruction 915a is projected onto the top surface 924 of the robot 922. These steps may be repeated over a plurality of instructions corresponding to a maintenance procedure to assist the user in quickly completing the procedure.

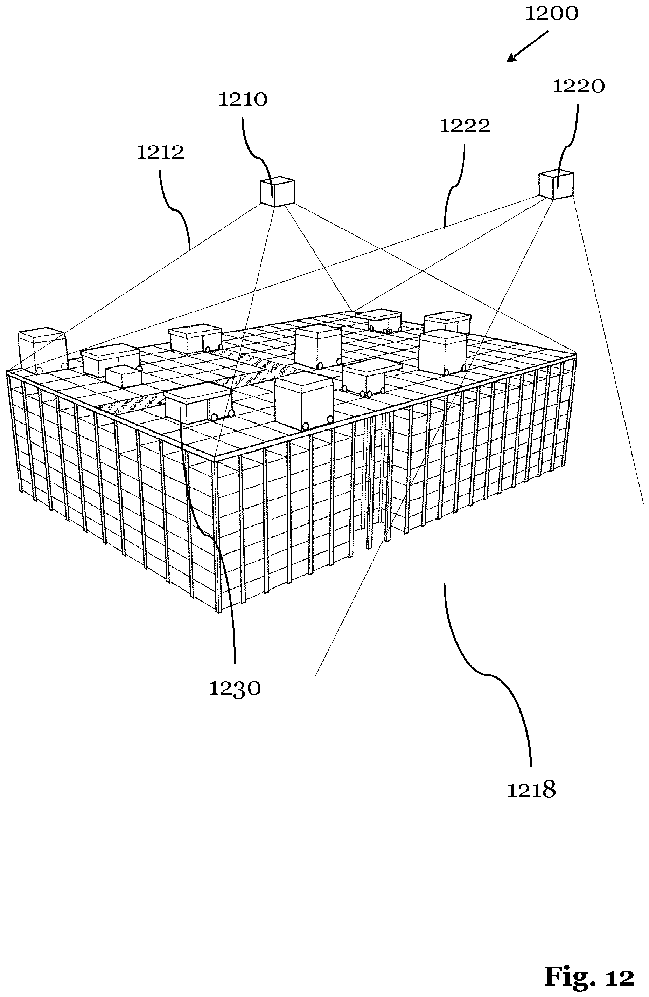

It will be appreciated that it can be difficult to provide a single projector that would cover all areas of a grid, or adjacent to a grid, such that complete instructions and images can be provided to a user. For example, due to the presence of a plurality of robots moving about the grid, it is possible that a first image could be projected onto the rails of the grid at a first time, but that a robot could block that image at a second time. In order to provide complete coverage of the desired surfaces of the grid, a second projector may be provided. Fig. 12 shows a grid 1200 comprising a first projector 1210 and a second projector 1220. The first projector 1210 has a first field of view 1212 and the second projector 1220 has a second field of view 1222. The first field of view 1212 and the second field of view 1222 are different fields of view. In the example shown in Fig. 12, the first field of view 1212 and the second field of view 1222 overlap. However, in some examples the first field of view 1212 and the second field of view 1222 need not overlap. The second projector 1220 may provide coverage of the first image at a location not projectable by the first projector 1210. For example, as shown in Fig. 12, the first projector 1210 is unable to project onto the floor 1218 adjacent to the grid 1200 because the field of view 1212 does not cover the floor 1218. The second projector 1220 supplements the first projector 1210 by providing additional coverage of the floor 1218.

In examples where the first field of view 1212 and the second field of view 1222 overlap, the second projector 1220 may supplement coverage of grid 1200 when the first field of view 1212 is blocked by a part or component that is moving. For example, where robot 1230 blocks the area of the grid directly behind robot 1230 relative to the first projector 1210, the second projector 1220 may supplement the projection of the first projector 1210 to provide a complete first image on the grid 1200 that is unobstructed by the robot 1230. Where the second projector 1220 supplements the projection of the first projector 1210, the first projector 1210 may not project the first image in the region of overlap between the first field of view 1212 and the second field of view 1222 such that the projection is not applied to the robot 1230.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A method of performing projection mapping onto one or more components of an automated storage and retrieval system comprising:
providing a first projector having a first field of view, the first field of view at least partially overlapping with a first surface of the one or more components of the automated storage and retrieval system,
detecting a first position of the first surface;
controlling the first projector to project a first image aligned with the first position such that the first image is projected onto the first surface.

2. The method of claim 1, wherein the detecting the first position of the first surface comprises receiving data from a system controller of the automated storage and retrieval system, wherein the system controller is configured to control the positions of a plurality of robots operating on the automated storage and retrieval system.

3. The method of claim 2, wherein the data received from the system controller includes actual and/or predicted positions of a plurality of robots operating on the automated storage and retrieval system.

4. The method of claim 2 or claim 3, wherein the data received from the system controller is obtained from one or more sensors positioned on each of the plurality of robots, optionally wherein the sensors include rotary encoders, linear encoders, optical encoders, proximity sensors, ultrasound sensors, and/or position sensors.

5. The method of any preceding claim, wherein the first surface comprises one or more of a top surface of a grid of storage columns, a top surface of a plurality of robots operating on the automated storage and retrieval system, a floor surface adjacent to the grid of storage columns, and/or a surface of a robot positioned for maintenance operations.

6. The method of any preceding claim, wherein detecting the first position comprises observing the first surface in the view of a first camera, and determining the first position based on an offset between the first camera and the one or more components of the automated storage and retrieval system.

7. The method of any preceding claim, wherein the first image comprises one or more of instructions, a path, and/or highlighting of portions of the first surface.

8. The method of any preceding claim, further comprising:
detecting completion of a first step in a process, and
controlling the first projector to project a second image aligned with the first position such that the second image is projected onto the first surface, and optionally wherein detecting completion of the first step in the process comprises detecting a change in the one or more components, or receiving a user input indicative of the completion of the first step in the process.

9. The method of any preceding claim, wherein the first surface is a surface of a robot positioned for maintenance operations, and optionally wherein the first surface comprises a component of the robot to be removed, inspected, or maintained.

10. The method of any preceding claim, further comprising
providing a second projector having a second field of view, the second field of view at least partially overlapping with the first surface of the one or more components of the automated storage and retrieval system, and the second field of view partially overlapping with the first field of view,
determining that a portion of the first surface is obstructed from the first field of view; and
controlling the second projector to project the first image aligned with the first position such that the first image is projected onto the first surface

11. The method of claim 10, further comprising
preventing the first projector from projecting the first image onto the portion of the first surface that is obstructed from the first field of view.

12. A projection mapping system comprising a first projector in communication with a first processing system, wherein the processing system is configured to control the first projector to perform the method according to any preceding claim.

13. An automated storage and retrieval system comprising:
a first projector having a first field of view, the first field of view at least partially overlapping with a first surface of one or more components of the automated storage and retrieval system; and
a first processing system in communication with the first projector and
configured to perform the method according to any of claims 1 to 11.

14. A computer-readable medium comprising instructions which, when executed by a processing system, cause the processing system to perform the method according to any of claims 1 to 11.
